Europäisches Patentamt

European Patent Office

Office européen des brevets

(19)

(11) Numéro de publication: **0 212 030 B1**

# FASCICULE DE BREVET EUROPEEN

(12)

(45) Date de publication de fascicule du brevet:
**20.03.91**

(51) Int. Cl.⁵: **H04L 27/06**

(21) Numéro de dépôt: 85430024.1

(22) Date de dépôt: **02.08.85**

---

(54) **Dispositif de détection de fin d'energie d'un signal de données.**

---

(43) Date de publication de la demande:
**04.03.87 Bulletin 87/10**

(45) Mention de la délivrance du brevet:
**20.03.91 Bulletin 91/12**

(84) Etats contractants désignés:
**DE FR GB IT**

(56) Documents cités:
EP-A- 0 054 583
US-A- 4 327 440
US-A- 4 343 041
US-A- 4 494 240

IBM TECHNICAL DISCLOSURE BULLETIN, vol.
25, no. 1, juin 1982, pages 344-345, New York,
US; D. GODARD et al.: "Transient signal detector for modems"

(73) Titulaire: **International Business Machines
Corporation
Old Orchard Road
Armonk, N.Y. 10504(US)DE GB IT**

Titulaire: **Compagnie IBM FRANCE
5 Place Vendôme
F-75000 Paris 1er(FR)FR**

(72) Inventeur: **Maddens, Francis
Domaine du Colombier
F-06480 La Colle Sur Loup(FR)**

(74) Mandataire: **Bonneau, Gérard
Compagnie IBM France Département de Propriété Intellectuelle
F-06610 La Gaude(FR)**

EP 0 212 030 B1

## Description

La présente invention concerne la transmission de données au moyen de signaux analogiques, et particulièrement une méthode et un dispositif de détection de fin d'énergie d'un signal reçu par le récepteur d'un système d'émission/réception de données sous forme de signaux analogiques.

Dans les systèmes de communication de données sous forme de signaux analogiques sur des lignes téléphoniques, les données se présentent sous la forme de modulations d'un signal porteur. Les états de modulation sont choisis parmi un ensemble fini de valeurs discrètes d'amplitude et/ou de phase. De façon générale, le signal porteur est modulé à l'émission dans un modulateur et démodulé à la réception dans un démodulateur, l'ensemble modulateur/démodulateur étant appelé modem.

Certains systèmes de transmission travaillent en "porteuse continue", c'est-à-dire que le signal porteur est transmis sur la ligne téléphonique même en l'absence de transmission de données.

Mais dans d'autres systèmes de transmission, tels que les systèmes en configuration multipoint, les terminaux sont invités à transmettre leurs données à tour de rôle vers le système de commande. Il est alors nécessaire que, lorsqu'un terminal a cessé de transmettre, la porteuse soit également interrompue pour que le système de commande puisse donner l'opportunité de transmettre à un autre terminal. Comme il est impossible de détecter le moment exact où la transmission cesse, le problème qui se pose est de disposer d'un dispositif de détection de fin de transmission permettant de minimiser l'intervalle de temps séparant la fin exacte de la transmission de l'instant où cette fin de transmission a pu être détectée.

La méthode la plus simple pour détecter la fin de transmission est de faire suivre les données par une suite de "zéros". Après un certain nombre de "zéros" reçu par le dispositif de réception, la logique de détection décrète qu'il y a fin de transmission. Malheureusement il suffit de pertubations sur la ligne pour que la fin de transmission ne soit pas reconnue.

Une autre méthode consiste à utiliser un protocole qui indique la fin de transmission par une séquence particulière de bits. Cette méthode présent plusieurs inconvénients. D'abord, contrairement à la séquence de "zéros", elle ne permet pas de détecter une coupure de ligne puisque dans ce cas, la logique de détection ne reçoit pas la séquence particulière de bits. Ensuite, cette méthode exclut certaines combinaisons de bits utilisées pour la séquence particulière et de ce fait exige une plus grande capacité de traitement du système. En outre, si on veut une protection efficace contre le bruit, on devra utiliser une séquence particulière suffisamment longue, ce qui augmente d'autant le temps de détection de la fin de transmission.

De façon à pallier les inconvénients cités ci-dessus, et à pouvoir détecter également la fin de transmission par coupure de ligne, on a utilisé la méthode consistant à détecter la chute d'énergie du signal reçu. Ce dernier est échantillonné, on mesure l'énergie pour chaque échantillon et on effectue une comparaison avec un seuil prédéterminé comme dans le brevet US-A-4 494 240. Dans ce dernier document une des réalisations subordonne la fin de transmission à la réalisation simultanée de deux conditions lorsque le signal chute au-dessous d'un seuil d'amplitude prédéterminé et au-dessous d un seuil d'énergie prédéterminé.

Cette dernière méthode trouve sa meilleure application dans les systèmes de transmission utilisant la modulation de phase. Mais dans les systèmes actuels à grande vitesse, où sont utilisés des états de modulation pris parmi des constellations comportant de nombreux niveaux d'amplitude, la fin de transmission peut se produire aussi bien sur un grand niveau d'amplitude que sur un petit niveau. L'énergie du signal mettra donc un temps plus ou moins long, suivant que la fin de la transmission se produira sur un grand ou petit niveau d'amplitude, pour descendre au dessous du seuil prédéterminé d'énergie. Par conséquent, on ne peut pas connaître avec exactitude l'intervalle de temps séparant la fin de la transmission et l'instant de détection de cette fin de tranmission.

L'objet de l'invention est donc une méthode de détection rapide de la chute d'énergie d'un signal reçu par le récepteur d'un système de transmission de données, que la chute d'énergie résulte de la fin de transmission des données ou résulte d'une coupure de ligne.

Un autre objet de l'invention est une méthode de détection rapide de la chute d'énergie d'un signal reçu par le récepteur d'un système de transmission de données, l'intervalle de temps séparant l'instant auquel s'est produit la chute d'énergie et l'instant de détection, étant indépendant du niveau d'énergie du signal au moment de la chute d'énergie.

Encore un autre objet de l'invention est un détecteur de fin d'énergie d'un signal reçu par le récepteur d'un système de transmission de données, mettant en oeuvre la méthode de l'invention.

La méthode de l'invention comprend les étapes consistant à intégrer numériquement chaque échantillon du signal de données de façon à obtenir un échantillon de signal représentatif de l'énergie du signal de données, emmagasiner dans un registre la valeur de l'échantillon du signal représentatif de l'énergie du

2

EP 0 212 030 B1

signal de données si, par rapport à la valeur de l'échantillon précédent, cette valeur n'a pas décru selon un taux de décroissance supérieur à une valeur prédéterminée, comparer, à chaque instant d'échantillonnage, la valeur emmagasinée dans le registre avec la valeur d'énergie de chaque échantillon du signal représentatif de l'énérgie du signal de données, et produire un signal de chute d'énergie lorsque le résultat de la comparaison indique que la valeur d'énergie d'un échantillon du signal représentatif de l'énergie du signal de données est inférieure à une fraction prédéterminée de la valeur d'énergie emmagasinée.

Le détecteur permettant de mettre en oeuvre la méthode de l'invention comprend des moyens d'intégration numérique pour obtenir, à chaque instant d'échantillonnage, un échantillon de signal représentatif de l'énergie dudit signal de données, des moyens d'emmagasinage de la valeur de l'échantillon du signal représentatif de l'énergie du signal de données lorsque, par rapport à la valeur de l'échantillon précédent, cette valeur n'a pas décru selon un taux de décroissance supérieur à une valeur prédéterminée, des moyens de comparaison de la valeur emmagasinée avec la valeur de chaque échantillon du signal représentatif de l'énergie du signal de données, et des moyens de seuil pour fournir un signal de chute d'énergie lorsque la valeur d'énergie de l'échantillon du signal de données devient inférieure à une fraction prédéterminée de la valeur emmagasinée dans les moyens d'emmagasinage.

Une réalisation de l'invention est décrite ci-dessous en référence aux figures suivantes dans lesquelles :

La figure 1 représente un dispositif de réception de données comportant un détecteur de chute d'énergie selon l'invention.

La figure 2 représente un détecteur de chute d'énergie selon l'invention.

La figure 3 est un organigramme représentant schématiquement les différentes étapes de la méthode de détection de chute d'énergie selon l'invention.

La figure 4 montre des exemples de courbes du signal comportant une chute d'énergie détectée par le détecteur de chute d'énergie selon l'invention.

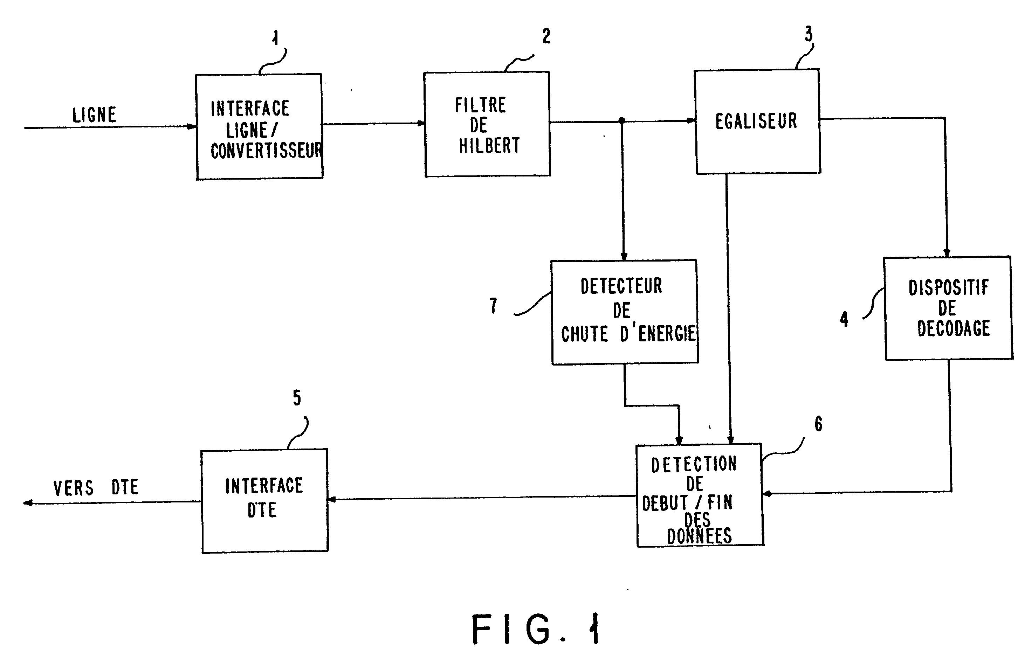

Le dispositif de détection de chute d'énergie conforme à l'invention, peut être utilisée dans un dispositif de réception de données tel qu'un modem représenté schématiquement sur la figure 1.

Le signal analogique reçu sur la ligne est mis en forme, adapté et converti en un signal numérique dans l'interface ligne/convertisseur 1. Le signal numérique est traité par un filtre de Hilbert 2 qui, en dehors d'une fonction de filtrage, fournit les composantes en phase et en quadrature du signal à l'égaliseur 3 chargé de légalisation du spectre de fréquence du signal. Puis le signal numérique est décodé dans le dispositif de décodage 4 qui fournit en sortie la suite de données numériques telles qu'elles ont été transmises par le dispositif d'émission.

Avant d'être fournies à l'interface DTE 5 pour être transmises vers l'équipement terminal de données (DTE), les données numériques, qui se présentent comme une suite de bits à la sortie du dispositif de décodage 4, sont traitées par un dispositif de détection de début/fin des données 6. La détection de début . des données qui peut se faire à partir de l'égaliseur, comme représenté sur la figure 1, par corrélation entre deux points différents de l'égaliseur, n'est pas l'objet de l'invention et ne sera pas décrite ici. La détection de fin des données est effectuée en réponse au signal de chute d'énergie fournie par le détecteur de chute d'énergie 7 objet de la présente invention à partir des composantes du signal numérique en sortie du filtre de Hilbert 2.

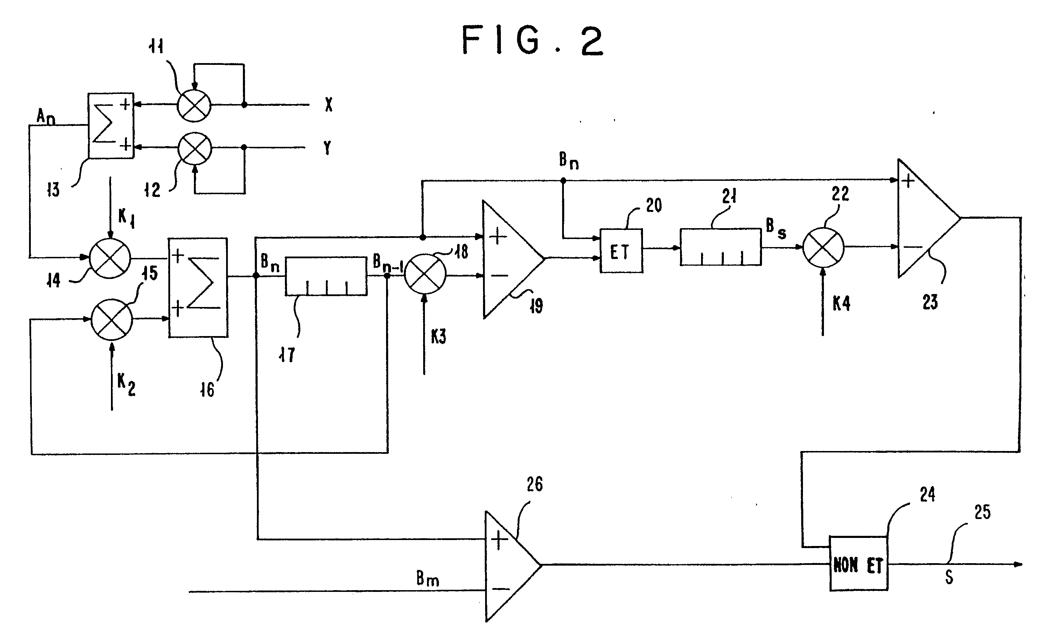

Le détecteur de chute d'énergie selon la présente invention est maintenant décrit en référence à la figure 2.

Les composantes numériques X et Y en phase et quadrature fournies par le filtre de Hilbert sont chacune élevées au carré par les multiplicateurs 11 et 12 avant d'être additionnées par le sommateur 13. Ce dernier fournit donc en sortie un signal numérique A représentant le carré $(X^2 + Y^2)$ du module du signal à analyser, donc affranchi des contraintes de phase.

Les échantillons du signal A sont transmis à l'entrée d'un intégrateur numérique destiné à fournir l'énergie moyenne répartie dans le temps du signal à analyser. Il est à noter que la fréquence d'échantillonnage appliquée au signal doit être au moins égale à deux fois le taux de modulation des données pour satisfaire au théoreme de l'échantillonnage.

L'intégration numérique se compose de deux multiplicateurs 14 et 15, d'un sommateur 16 et d'un registre 17.

La sortie du sommateur 16 fournit un signal $B_{(n)}$ représentant l'énergie du signal à analyser. A chaque instant d'échantillonnage, la valeur du signal d'énergie, désignée par $B_n$ pour indiquer qu'il s'agit de l'instant d'échantillonnage n, est chargée dans le registre 17.

A l'instant d'échantillonnage n, le sommateur 16 reçoit en entrées, d'une part la valeur du signal $A_n$ multipliée par un coefficient K1 dans le multiplicateur 14, et d'autre part la valeur $B_{n-1}$ du signal d'énergie qui avait été chargée dans le registre 17 à l'instant d'échantillonnage n-1, multipliée par le coefficient K2 dans le multiplicateur 15. La valeur $B_n$ du signal d'énergie en sortie du sommateur 16 s'exprime donc par

3

l'équation

$$B_n = K1 . A_n + K2 . B_{n-1}$$

Le coefficient K1 est le facteur d'échelle et le coefficient K2 permet d'ajuster la constante de temps de l'intégrateur numérique. De façon à ce que le signal d'énergie obtenu ait une amplitude équivalente à celle du signal d'entrée on choisit K1 et K2 tels que

$$K1 + K2 = 1$$

Des valeurs qui conviennent particulièrement bien sont

$$K1 = \frac{1}{16} \text{ et } K2 = \frac{15}{16}$$

La valeur du signal d'énergie $B_n$ et la valeur $B_{n-1}$ (en sortie du registre 17) multipliée par un coefficient multiplicateur K3, dans le multiplicateur 18, servent d'entrée à un comparateur 19. Selon que la valeur $B_n$ est supérieure ou égale ou inférieure à $(K3 . B_{n-1})$, le comparateur 19 produit un "1" ou un "0" en sortie. Lorsque la sortie du comparateur 19 est à "1", le circuit "ET" 20 est passant, ce qui permet à la valeur d'énergie $B_n$ d'être transférée dans le registre 21.

On voit donc qu'à chaque instant d'échantillonnage, le registre 21 est chargé de la valeur d'énergie $B_n$ fournie à cet instant d'échantillonnage aussi longtemps que ladite valeur vérifie la relation

$$B_n \geqq K3 . B_{n-1}$$

ou

$$\frac{B_n}{B_{n-1}} \geqq K3$$

Si on choisit K3 légèrement inférieur à 1, par exemple K3 = 63/64, on voit donc qu'une nouvelle valeur du signal d'énergie est chargée dans le registre 21 à chaque instant d'échantillonnage tant que le taux de décroissance du signal d'énergie

$$1 - B_n / B_{n-1}$$

n'est pas supérieur à une certaine valeur prédéterminée, soit dans l'exemple cité

$$1 - K3 = 1/64.$$

Par contre, lorsque la valeur $B_n$ est telle que $B_n/B_{n-1} < K3$, le comparateur 19 fournit une valeur "0" en sortie qui bloque le circuit ET 21, et $B_n$ n'est pas chargée dans le registre 21 qui contient toujours $B_{n-1}$. Par conséquent, le registre 21 contient la valeur du signal d'énergie à partir de laquelle le taux de décroissance du signal est supérieur à une valeur prédéterminée (par exemple 1/64).

On doit noter que l'invention n'est pas limitée à la réalisation ci-dessus où la valeur $B_n$ est comparée seulement à $B_{n-1}$. Ainsi, le registre 21 pourrait être chargé avec la valeur $B_n$ obtenue à l'instant d'échantillonnage n tant que la relation ci-dessous est réalisée.

$B_n \geqq a1.B_{n-1} + a2.B_{n-2} + a3.B_{n-3} + \ldots$ où $B_{n-1}$, $B_{n-2}$, $B_{n-3}$ ... sont les valeurs d'énergie fournies aux instants d'échantillonnage n-1, n-2, n-3 ... etc. Un circuit mettant en jeu une telle relation est à la portée de l'homme du métier, sans qu'il soit besoin de le décrire ici.

La valeur $B_n$ du signal d'énergie à l'instant d'échantillonnage n est également une entrée du comparateur 23. L'autre entrée dudit comparateur est la valeur $B_s$ du signal d'énergie se trouvant dans le registre 21 à cet instant multipliée par un coefficient K4 dans le multiplicateur 22. Il est à noter que cette valeur $B_s$ peut être une valeur du signal d'énergie chargée dans le registre plusieurs instants d'échantillonnage auparavant, puisque, comme il vient d'être expliqué, le registre 21 contient la valeur à partir de laquelle le signal d'énergie a un taux de décroissance supérieur à une valeur prédéterminée.

Selon que la valeur $B_n$ est supérieure ou inférieure à $K4.B_s$, le comparateur 23 fournit un "1" ou un "0" en sortie. Le coefficient K4 étant compris entre 0 et 1, ceci signifie que le comparateur ne fournit une sortie "0" que si la valeur du signal d'énergie $B_n$ à l'instant d'échantillonnage n est telle que

$$B_n < K4 . B_s$$

c'est-à-dire est tombée au-dessous d'un pourcentage prédéterminé de la valeur de seuil $B_s$ à partir de laquelle le taux de croissance de l'énergie est devenu supérieur à une valeur prédéterminée. Une valeur K4 = 3/8 convient particulièrement bien pour illustrer l'invention. La sortie du comparateur 23 commande une entrée du circuit NON-ET 24. Par conséquent, lorsque la sortie du comparateur 23 est "0", c'est-à-dire qu'une chute d'énergie a été détectée comme il a été expliqué en référence à la figure 2, un bit "1" est transmis sur la sortie S 25.

Il peut se produire le cas où la valeur d'énergie $B_n$ soit tellement faible qu'il est inutile de mettre en jeu le dispositif de détection de chute d'énergie tel qu'il vient d'être décrit. Pour cette raison, la valeur $B_n$ est comparée, dans un comparateur 26 à une valeur minimum $B_m$. Lorsque la valeur $B_n$ devient inférieure à $B_m$, le comparateur 26 fournit une sortie "0" qui est transmise à l'entrée du circuit NON-ET 24 qui, à son tour fournit un bit "1" sur la ligne S 25.

En référence à la figure 2, vient d'être décrit un dispositif de détection de chute d'énergie d'un signal numérique, réalisé à partir de multiplicateurs, sommateurs, comparateurs et circuits logiques, c'est-à-dire réalisé en éléments matériels.

Mais le dispositif de l'invention peut être également implémenté dans un système de traitement de données commandé par programme. En ce cas toutes les fonctions du dispositif sont réalisées sous la commande d'un microcode emmagasiné dans la mémoire du système.

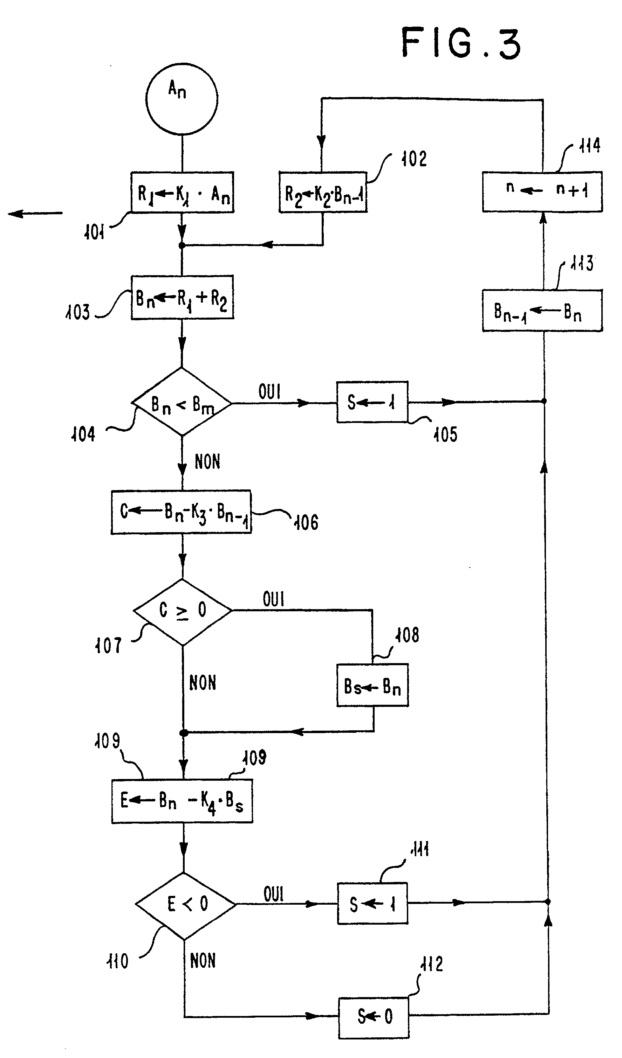

La figure 3 représente un organigramme des étapes de la méthode de détection de chute d'énergie selon la présente invention, dont l'implémentation sous forme de programme est à la portée de l'homme de l'art.

A chaque instant d'échantillonnage, les instructions 101 et 102 chargent les registres R1 et R2 avec la valeur de l'échantillon de signal reçu $A_n$ et la valeur du signal d'énergie $B_{n-1}$ multipliés respectivement par les coefficients K1 et K2. A l'étape 103, le registre $B_n$ est chargé par la somme des contenus de R1 et R2. L'instruction 104 teste alors $B_n$ pour vérifier si $B_n$ est inférieur à une valeur minimale prédéterminée $B_m$. Si c'est le cas, le registre S est chargé avec la valeur 1 (étape 105) indiquant que l'énergie du signal à chuté au-dessous de la valeur $B_m$. Sinon, à l'étape 106, le registre C est chargé avec la valeur

$$B_n - K3 . B_{n-1}.$$

L'étape 107 permet de terminer si C est supérieur ou égal à 0, auquel cas, le registre Bs est chargé avec la valeur $B_n$ à l'étape 108. Après l'étape 108, et dans le cas où C n'est pas supérieur ou égal à 0, c'est-à-dire lorsque le taux de décroissance de l'énergie du signal dépasse une valeur prédéterminée, le registre E est chargé avec la valeur

$$B_n - K4 . Bs$$

à l'étape 109. Puis un test est effectué à l'étape 110 pour déterminer si le contenu du registre E est inférieur à zéro. Si c'est le cas, c'est-à-dire que la valeur de l'énergie du signal est tombée au dessous d'un pourcentage prédéterminé de la valeur de seuil BS, le registre S est chargé avec la valeur 1 à l'étape 111. Dans le cas contraire, le registre S est chargé avec la valeur 0 à l'étape 112.

Dans les trois cas où le registre S est chargé avec une nouvelle valeur, soit après les étapes 105, 111 ou 112, le programme passe à l'étape 113 au cours de laquelle le registre $B_{n-1}$ est chargé avec la valeur $B_n$. Puis à l'étape 114, un compteur est incrémenté de n à n + 1 de sorte que le programme boucle sur lui-même à l'instant d'échantillonnage suivant.

Comme il a été mentionné précédemment, la méthode de l'invention permet de rendre l'intervalle de temps séparant l'instant auquel se produit la chute d'énergie et l'instant de détection, indépendant du niveau d'énergie du signal au moment de la chute d'énergie.

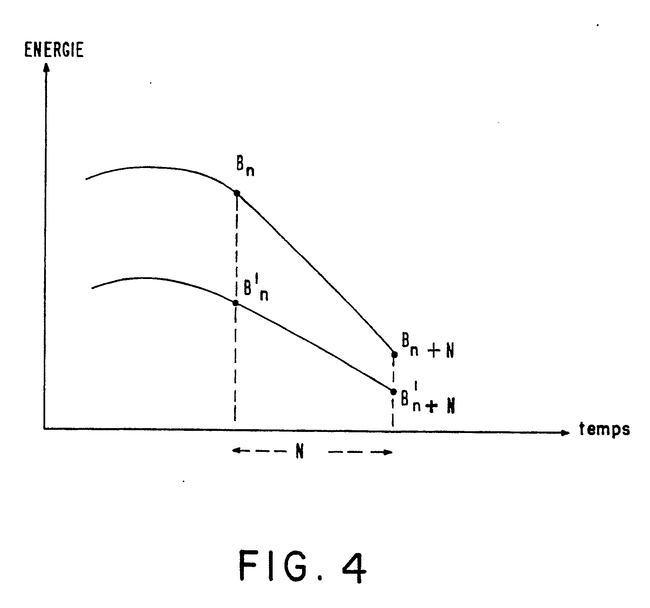

Ainsi, on a représenté sur la figure 4 deux cas possibles de chute d'énergie. Dans le premier cas la chute d'énergie se produit à partir de la valeur $B_n$ emmagasinée dans le registre 21 de la figure 2. La détection a lieu lorsque la valeur d'énergie descend à $B_{n+N}$, N instants d'échantillonnage plus tard. Dans le deuxième cas, la chute d'énergie se produit à partir de la valeur $B'_n$ emmagasinée dans le registre 21 et la détection a lieu lorsque la valeur d'énergie tombe à $B'_{n+N}$, également N instants d'échantillonnage plus tard.

Ceci s'explique facilement. En effet, la valeur $B_n$ à partir de laquelle se produit la chute d'énergie est telle que la valeur obtenue, à l'instant d'échantillonnage suivant vérifie la relation

$$B_{n+1} = K_3 \, B_n \qquad (1)$$

et ainsi de suite pour toutes les valeurs suivantes. Donc la valeur $B_{n+N}$ pour laquelle un signal de détection est fourni, est telle que :

$$B_{n+N} = (K_3)^N \cdot B_n \qquad (2)$$

Comme on l'a vu, le signal de détection de chute d'énergie est produit lorsque la valeur du signal d'énergie est égale à une fraction prédéterminée de la valeur emmagasinée ($B_n$) dans le registre 21. On a donc

$$B_{n+N} = K_4 \cdot B_n \qquad (3)$$

La comparison des équations (2) et (3) montre que
$(K_3)^N = K_4$
et que le nombre d'instants d'échantillonnage N est indépendant du niveau d'énergie, $B_n$ ou $B'_n$, au moment où s'est produite la chute d'énergie.

La description qui précéde montre que la méthode et le dispositif de l'invention permettent une détection de chute d'énergie qui n'est pas tributaire du niveau d'énergie auquel se produit la chute, ni de la cause qui a provoqué cette chute, que ce soit par fin de transmission des données ou par coupure de la ligne. En outre le choix des coefficients de multiplication $K_1$, $K_2$, $K_3$ et $K_4$ permet, dans une grande mesure, de jouer sur la précision des résultats obtenus.

## Revendications

1.  Méthode de détection de la chute d'énergie d'un signal de données se présentant sous forme d'échantillons numériques, dans un dispositif de réception d'un système de transmission de données; ladite méthode étant caractérisée par les étapes suivantes :

    - intégration numérique de chaque échantillon (An) du signal de données de façon à obtenir un échantillon de signal (Bn) représentatif de l'énergie dudit signal de données;

    emmagasinage dans un registre de la valeur de l'échantillon (Bn) dudit signal représentatif de l'énergie du signal de données si, par rapport à la valeur de l'échantillon précédent (Bn-1), ladite valeur n' a pas décru selon un taux de décroissance 1-Bn/Bn-1 supérieur à une valeur prédéterminée,

    - comparaison, à chaque instant d'échantillonnage de ladite valeur emmagasinée ($B_s$) dans ledit registre avec la valeur d'énergie de chaque échantillon dudit signal représentatif de l'énergie du signal de données, et

    - production d'un signal de chute d'énergie (S) lorsque le résultat de ladite comparaison indique que la valeur d'énergie d'un échantillon dudit signal représentatif de l'énergie du signal de données est inférieure à une fraction prédéterminée ($K_4$) de ladite valeur d' énergie emmagasinée.

2.  Méthode selon la revendication 1 caractérisée en ce que l' intégration numérique de l'échantillon dudit signal de données à l' instant d' échantillonnage n consiste à faire la somme du produit de la valeur ($A_n$) dudit échantillon par un coefficient (K1), et du produit de la valeur ($B_{n-1}$) du signal représentatif de l'énergie dudit signal de donées obtenu à l'instant d'échantillonnage précédent n-1 par un coefficient ($K_2$).

3.  Méthode selon la revendication 2 caractérisée en ce que lesdits coefficients K1 et K2 vérifient la relation K1 + K2 = 1.

4.  Méthode sel on la revendication 3 caractérisée en ce que K1 = 1/16 et K2 = 15/16.

**5.** Méthode selon l'une quelconque des revendications précédentes caractérisée en ce que les valeurs ($A_n$) dudit signal de données sont égales à la somme des carrés des composantes numériques en phase et en quadrature du signal numérique fourni à la sortie du filtre de Hilbert dans un modem.

**6.** Méthode selon l'une quelconque des revendications précédentes caractérisée en ce que la valeur ($B_n$) dudit signal représentatif de l'énergie du signal de données est comparée, à chaque instant d'échantillonnage à une valeur minimale ($B_m$), de façon à produire ledit signal de chute d'énergie (S) lorsque ladite valeur ($B_n$) est inférieure à ladite valeur minimale.

**7.** Détecteur de la chute d'énergie d'un signal de données se présentant sous forme d'échantillons numériques, dans un dispositif de réception d'un système de transmission de données, caractérisé en ce qu'il comprend :
  - des moyens d'intégration numérique (14, 15, 16, 17) pour obtenir, à chaque instant d'échantillonnage, un échantillon de signal $B_n$, représentatif de l'énergie dudit signal de données,
  des moyens d'emmagasinage (18, 19, 20, 21) de la valeur de l'échantillon dudit signal représentatif de l'énergie du signal de données lorsque, par rapport à la valeur de l'échantillon précédent (Bn-1), ladite valeur n'a pas décru selon un taux de décroissance 1-Bn/Bn-1 supérieur à une valeur prédéterminée,
  des moyens de comparaison, de ladite valeur emmagasinée (Bs) avec la valeur ($R_n$) de chaque échantillon dudit signal représentatif de l'énergie du signal de données, et
  - des moyens de seuil (22, 23) pour fournir un signal de chute d'énergie lorsque la valeur d'énergie de l'échantillon dudit signal représentatif de l'énergie du signal de données devient inférieure à une fraction prédéterminée de ladite valeur d'énergie emmagasinée dans lesdits moyens d'emmagasinage.

**8.** Détecteur selon la revendication 7 caractérisé en ce que lesdits moyens d'intégration comprennent:
  - un premier multiplicateur (14) pour multiplier l'échantillon ($A_n$) du signal reçu à un instant d'échantillonnage n par un coefficient K1 et un deuxième multiplicateur (15) pour multiplier l'échantillon ($B_{n-1}$) dudit signal représentatif de l'énergie obtenu à l'instant d'échantillonnage précédent n-1, par un coefficient K2;
  - un sommateur (16) pour faire la somme des signaux obtenus à la sortie desdits premier et deuxième multiplicateurs, et
  - un registre (17) pour emmagasiner l'échantillon ($B_{n-1}$) dudit signal représentatif de l'énergie du signal de données fourni à l'instant d'échantillonnage n-1.

**9.** Détecteur selon la revendication 8 caractérisé en ce que lesdits moyens d'emmagasinage comprennent:
  - un multiplicateur (18) pour multiplier la valeur de l'échantillon dudit signal représentatif de l'énergie du signal de données fourni à l'instant d'échantillonnage n-1 par un coefficient K3;
  - un comparateur (19) pour comparer le signal fourni à la sortie dudit multiplicateur de coefficient K3, à la valeur de l'échantillon (Bn) dudit signal représentatif de l'énergie du signal de données obtenu à l'instant d'échantillonnage n;
  - un circuit ET pour transmettre la valeur dudit échantillon ($B_n$) obtenu à l'instant d'échantillonnage n lorsque ledit comparateur fournit un signal indiquant que ladite valeur est supérieure au produit de la valeur ($B_{n-1}$) de l'échantillon obtenu à l'instant d'échantillonnage n-1 par ledit coefficient K3, et
  - un registre (21) pour emmagasiner ladite valeur (Bn) transférée par ledit circuit ET.

**10.** Détecteur selon l'une quelconque des revendications précédentes comportant en outre un comparateur (26) comparant la valeur ($B_n$) de l'échantillon dudit signal représentatif de l'énergie du signal de données à une valeur d'énergie minimale ($B_m$), ledit comparateur fournissant un signal indiquant une chute d'énergie lorsque ladite valeur $B_n$ est inférieure à ladite valeur minimale.

## Claims

**1.** A method for detecting the energy drop of a data signal taking the form of digital samples, in the receiving apparatus of a data transmission system, said method being characterized in that it includes the steps of:
  - digitally integrating each sample ($A_n$) of the data signal so as to obtain a sample ($B_n$) of a signal ·

7

representative of the energy of said data signal;

- storing in a register the value of sample ($B_n$) of said signal representative of the energy of the data signal if, compared with the value of the preceding sample ($B_{n-1}$), said value has not decreased according to a decrease rate 1-Bn/Bn-1 that exceeds a predetermined value;

- comparing at each sampling time said stored value ($B_s$) in said register with the energy value of each sample of said signal representative of the energy of the data signal; and

- producing an energy drop signal (S) when the result of said comparison shows that the energy value of a sample of said signal representative of the energy of the data signal is less than a predetermined fraction ($K_4$) of said stored energy value.

2. A method according to claim 1, characterized in that the digital integration of the sample of said data signal at sampling time n consists in summing the product of value ($A_n$) of said sample and a coefficient ($K1$), and the product of value ($B_{n-1}$) of the signal representative of the energy of said data signal obtained at the preceding sampling time n-1 and a coefficient ($K_2$).

3. A method according to claim 2, characterized in that said coefficients K1 and K2 satisfy the relation K1 + K2 = 1.

4. A method according to claim 3, characterized in that K1 = 1/16 and K2 = 15/16.

5. A method according to any one of the preceding claims, characterized in that the values ($A_n$) of said data signal are equal to the sum of the squares of the digital in-phase and quadrature components of the digital signal provided at the output of the Hilbert filter in a modem.

6. A method according to any one of the preceding claims, characterized in that the value ($B_n$) of said signal representative of the energy of the data signal is compared at each sampling time with a minimum value ($B_m$), so as to produce said energy drop signal (S) when said value ($R_n$) is less than said minimum value.

7. Detector means for detecting the energy drop of a data signal taking the form of digital samples, in the receiving device of a data transmission system, characterized in that it includes:

- digital integration means (14, 15, 16, 17) for obtaining at each sampling time a signal sample $B_n$ representative of the energy of said data signal;

- means (18, 19, 20, 21) for storing the value of the sample of said signal representative of the energy of the data signal when, compared with the value of the preceding sample ($B_{n-1}$), said value has not decreased according to a decrease rate 1-Bn/Bn-1 that exceeds a predetermined value;

- means for comparing said stored value ($B_s$) with the value ($B_n$) of each sample of said signal representative of the energy of the data signal; and

- threshold means (22, 23) for providing an energy drop signal when the energy value of the sample of said signal representative of the energy of the data signal becomes less than a predetermined fraction of said energy value stored in said storage means.

8. Detector means according to claim 7, characterized in that said integration means includes:

- first multiplier means (14) for multiplying the sample ($A_n$) of the signal received at sampling time n by a coefficient K1, and second multiplier means (15) for multiplying the sample ($B_{n-1}$) of said signal representative of the energy of the data signal obtained at the preceding sampling time n-1, by a coefficient K2;

- summing means (16) for summing the signals obtained at the output of said first and second multiplier means; and

- register means (17) for storing sample ($B_{n-1}$) of said signal representative of the energy of the data signal obtained at sampling time n-1.

9. Detector means according to claim 8, characterized in that said storage means includes:

- multiplier means (18) for multiplying the value of the sample of said signal representative of the energy of the data signal obtained at sampling time n-1, by a coefficient K3;

- comparator means (19) for comparing the signal obtained at the output of said multiplier means for multiplying by a coefficient K3, with the value of sample ($B_n$) of said signal representative of the energy of the data signal obtained at sampling time n;

- an AND circuit for transmitting the value of said sample ($B_n$) obtained at sampling time n when said comparator means provides a signal indicating that said value exceeds the product of the value ($B_{n-1}$) of the sample obtained at sampling time n-1 and said coefficient K3; and
- register means (21) for storing said value ($B_n$) transferred through said AND circuit.

10. Detector means according to any one of the preceding claims, further including comparator means (26) for comparing the value ($B_n$) of the sample of said signal representative of the energy of the data signal with a minimum energy value ($B_m$), said comparator means providing a signal indicative of an energy drop when said value $B_n$ is less than said minimum value.


**Ansprüche**

1. Verfahren für die Detektion des Energieabfalls eines Datensignals, das in Form digitaler Muster in einer Empfangsvorrichtung eines Datenübertragungssystems ansteht; besagtes Verfahren durch folgende Schritte gekennzeichnet :
   - digitale Integrierung eines jeden Musters ($A_n$) des Datensignals, um ein Signalmuster ($B_n$) zu erhalten, das für die Energie des besagten Datensignals repräsentativ ist;
   Speichern des Wertes des Musters ($B_n$) des besagten Signals, das für die Energie des Datensignals repräsentativ ist, wenn der besagte Wert, bezogen auf den Wert des vorangehenden Musters ($B_{n-1}$) nicht in einer Abfallrate 1-Bn/Bn-1 abgenommen hat, die größer ist als ein vorgegebener Wert,
   - Vergleich, zu jedem Bemusterungszeitpunkt des besagten gespeicherten Werts ($B_s$) im besagten Register mit dem Wert der Energie eines jeden Musters des besagten für die Energie des Datensignals repräsentativen Wert, und
   - Erzeugung eines Energieabfallsignals (S), wenn das Ergebnis des besagten Vergleichs anzeigt, daß der Energiewert eines Musters des besagten für die Energie des Datensignals repräsentativen Signals geringer ist als ein vorgegebener Bruchteil ($K_4$) des besagten Werts gespeicherter Energie.

2. Verfahren gemäß Anspruch 1, dadurch gekennzeichnet, daß die digitale Integration des Musters des besagten Datensignals zum Zeitpunkt der Bemusterung n darin besteht, die Summe des Produkts des Wertes ($A_n$) des besagten Musters mit einem Beiwert (K1) und des Produkts des Wertes ($B_{n-1}$) des für die Energie des besagten Datensignals repräsentativen Signals zu bilden, das zum Zeitpunkt der vorangehenden Bemusterung n-1 mit einem Beiwert (K2) erhalten wurde.

3. Verfahren gemäß Anspruch 2, dadurch gekennzeichnet, daß die besagten Beiwerte K1 und K2 die Bedingung K1 + K2 = 1 erfüllen.

4. Verfahren gemäß Anspruch 3, dadurch gekennzeichnet, daß K1 = 1/16 und K2 = 15/16 sind.

5. Verfahren gemäß einem der vorangehenden Ansprüche, dadurch gekennzeichnet, daß die Werte ($A_n$) des besagten Datensignals gleich der Summe der Quadrate der digitalen Komponenten in Phase und in Quadratur des digitalen Signals sind, das am Ausgang des Hilbertfilters in einem Modern abgegeben wird.

6. Verfahren gemäß einem der vorangehenden Ansprüche, dadurch gekennzeichnet, daß der Wert ($B_n$) des besagten, für die Energie des Datensignals repräsentativen Werts zu jedem Bemusterungszeitpunkt mit einem Mindestwert ($B_m$) verglichen wird, um das besagte Energieabfallsignal (S) zu erzeugen, wenn der besagte Wert ($B_n$) geringer als der besagte Mindestwert ist.

7. Detektor des Energieabfalls eines Datensignals in Form von digitalen Mustern in einer Empfangsvorrichtung eines Datenübertragungssystems, dadurch gekennzeichnet, daß er enthält:
   - Mittel für digitale Integration (14, 15, 16, 17) um zu jedem Bemusterungszeitpunkt ein Muster des Signals $B_n$ zu erhalten, das für die Energie des besagten Datensignals repräsentativ ist,
   - Mittel für die Speicherung (18, 19, 20, 21) des Werts des Musters des besagten Signals, das für die Energie des Datensignals repräsentativ ist, wenn der besagte Wert, bezogen auf den Wert des vorangehenden Musters ($B_{n-1}$) nicht in einer Abnahmerate 1-Bn/Bn-1 abgenommen hat, die größer als ein vorgegebener Wert ist,
   - Mittel für den Vergleich des besagten Werts ($B_s$) mit dem Wert ($B_n$) eines jeden Musters des

9

besagten, für die Energie des Datensignals repräsentativen Wert, und

- Schwellenmittel (22, 23) für die Abgabe eines Energieabfallsignals, wenn der Energiewert des Musters des besagten, für die Energie des Datensignals repräsentativen Werts unter einen vorgegebenen Bruchteil des besagten in den besagten Speichermitteln gespeicherten Energiewerts abfällt.

8. Detektor gemäß Anspruch 7, dadurch gekennzeichnet, daß die besagten Integrationsmittel enthalten:

- einen ersten Multiplikator (14) für die Multiplikation des Musters ($A_n$) des zu einem Bemusterungszeitpunkts n empfangenen Signals mit einem Beiwert K1 und einen zweiten Multiplikator (15) für die Multiplikation des Musters ($B_{n-1}$) des besagten für die Energie repräsentativen, zum vorangehenden Bemusterungszeitpunkt n-1 empfangenen Signals, mit einem Beiwert K2;

- ein Summierglied (16), um die Summe der am Ausgang des besagten ersten und zweiten Multiplikators erhaltenen Signale zu bilden, und

- ein Register (17), um das Muster ($B_{n-1}$) des besagten für die Energie des Datensignals repräsentativen Signals zu speichern, das zum Bemusterungszeitpunkt n-1 abgegeben wird.

9. Detektor gemäß Anspruch 8, dadurch gekennzeichnet, daß die besagten Speichermittel enthalten:

- einen Multiplikator (18) für die Multiplikation des Werts des Musters des besagten für die Energie des Datensignals, das zum Bemusterungszeitpunkt n-1 abgegeben wird, repräsentativen Signals mit einem Beiwert K3;

- einen Vergleicher (19), um das am Ausgang des besagten Multiplikators mit dem Beiwert K3 abgegebene Signal mit dem Wert des Musters ($B_n$) des besagten , für die Energie des zum Bemusterungszeitpunkts n erhaltenen Datensignals zu vergleichen;

- eine UND-Schaltung für die Übertragung des besagten Bemusterungswerts ($B_n$) zum Zeitpunkt der Bemusterung n, wenn der besagte Vergleicher ein Signal abgibt, daß der besagte Wert größer ist als das Produkt des Werts ($B_{n-1}$) des zum Bemusterungszeitpunkt n-1 erhaltenen Musters durch den besagten Beiwert K3, und

- ein Register (21) für die Speicherung des besagten, durch die besagte UND-Schaltung übertragenen Wert ($B_n$).

10. Detektor nach einem der vorangehenden Ansprüche, ferner einen Vergleicher (26) enthaltend, der den Wert ($B_n$) des Musters des besagten, für die Energie des Datendignals repräsentativen Signals mit einem Mindestenergiewert ($B_m$) vergleicht, wobei der besagte Vergleicher ein Signal abgibt, das einen Energieabfall anzeigt, wenn der besagte Wert $B_n$ kleiner ist als der besagte Mindestwert.

DISPOSITIF DE DECODAGE — 4

EGALISEUR — 3

DETECTION DE DEBUT / FIN DES DONNEES — 6

DETECTEUR DE CHUTE D'ENERGIE — 7

FILTRE DE HILBERT — 2

INTERFACE LIGNE / CONVERTISSEUR — 1

INTERFACE DTE — 5

LIGNE

VERS DTE

FIG. 1

FIG. 2

12

EP 0 212 030 B1

# FIG.3

$A_n$

$R_1 \leftarrow K_1 \cdot A_n$  — 101

$R_2 \leftarrow K_2 \cdot B_{n-1}$  — 102

$n \leftarrow n+1$  — 114

$B_n \leftarrow R_1 + R_2$  — 103

$B_{n-1} \leftarrow B_n$  — 113

$B_n < B_m$  — 104
OUI → $S \leftarrow 1$  — 105
NON

$C \leftarrow B_n - K_3 \cdot B_{n-1}$  — 106

$C \geq 0$  — 107
OUI → $B_s \leftarrow B_n$  — 108
NON  — 109

$E \leftarrow B_n - K_4 \cdot B_s$  — 109

$E < 0$  — 110
OUI → $S \leftarrow 1$  — 111
NON → $S \leftarrow 0$  — 112

13

FIG. 4